Europäisches Patentamt

European Patent Office

Office européen des brevets

(19)

(11) Veröffentlichungsnummer: **0 302 270 B1**

## (12) EUROPÄISCHE PATENTSCHRIFT

(45) Veröffentlichungstag der Patentschrift:
06.03.91 Patentblatt 91/10

(51) Int. Cl.$^5$: **B62D 27/06, B62D 33/02**

(21) Anmeldenummer: **88111220.5**

(22) Anmeldetag: **13.07.88**

(54) **Riegelverschluss in einer seitlichen Einfassung für Bordwände von Nutzfahrzeugen.**

(30) Priorität: **03.08.87 DE 8710603 U**

(43) Veröffentlichungstag der Anmeldung:
**08.02.89 Patentblatt 89/06**

(45) Bekanntmachung des Hinweises auf die
Patenterteilung:
**06.03.91 Patentblatt 91/10**

(84) Benannte Vertragsstaaten:
**AT CH DE ES IT LI NL**

(56) Entgegenhaltungen:
**CH-A- 443 018
DE-B- 2 504 191
DE-U- 8 406 793**

(73) Patentinhaber: **F. HESTERBERG & SÖHNE
GmbH & Co. KG
Heilenbecker Strasse 50-60
W-5828 Ennepetal 1 (DE)**

(72) Erfinder: **Nieland, Friedhelm
Bonkampstrasse 40
W-5805 Breckerfeld (DE)**
Erfinder: **Feinbier, Joachim
Buntebach 12
W-5828 Ennepetal 15 (DE)**

(74) Vertreter: **Kneissl, Richard, Dr. et al
Patentanwälte Andrae, Flach, Haug, Kneissl
Steinstrasse 44
W-8000 München 80 (DE)**

**Beschreibung**

Die Erfindung betrifft einen Riegelverschluß in einer seitlichen Einfassung für Bordwände von Nutzfahrzeugen gemäß dem Oberbegriff des vorstehenden Hauptanspruchs.

Der vorstehende, in eine Bordwandeinfassung integrierte Riegelverschluß ist aus dem DE-GM 84 06 793 bekannt. Bei ihm steht der Verschlußteil frei vom Verbindungssteg des bügelförmig ausgebildeten inneren Riegelteils ab. Dadurch ist der Riegel insgesamt hohen Beanspruchungen ausgesetzt, was insbesondere für den Bereich des Riegels gilt, wo der bügelförmige Riegelteil in den eigentlichen Verschlußteil übergeht.

Der Erfindung lag die Aufgabe zugrunde, einen Riegelverschluß der in Rede stehenden Art so weiterzubilden, daß er diese Nachteile nicht aufweist.

Die Lösung dieser Aufgabe ergibt sich aus dem Kennzeichen des vorstehenden Hauptanspruchs.

Dadurch, daß der Verschlußteil eine eigene Führung besitzt, werden die Beanspruchungen des Riegels insgesamt verringert, was nicht nur zu einer erhöhten Belastbarkeit des Riegelverschlusses, sondern auch zu einer höheren Lebensdauer führt.

Weitere bevorzugte Merkmale der erfindungsgemäßen Vorrichtung ergeben sich aus den Unteransprüchen und werden nachstehend anhand der Figurenbeschreibung abgehandelt.

Eine Ausführungsform des erfindungsgemäßen Riegelverschlusses wird nun anhand der beigefügten Zeichnungen näher erläutert.

In den Zeichnungen zeigen :

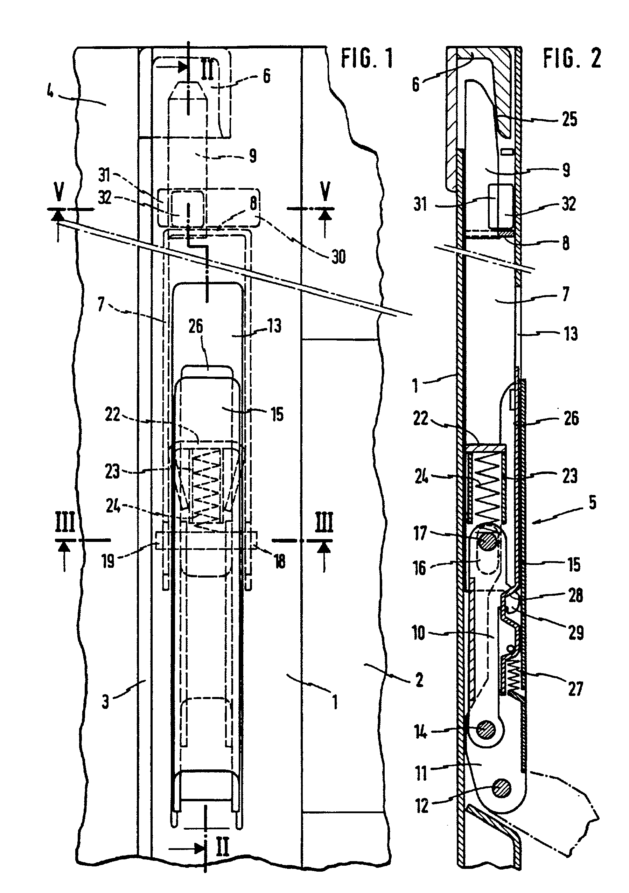

Figur 1 eine Aufsicht auf die erfindungsgemäße Vorrichtung,

Figur 2 einen Schnitt durch die Vorrichtung von Figur 1 an der Linie II-II ;

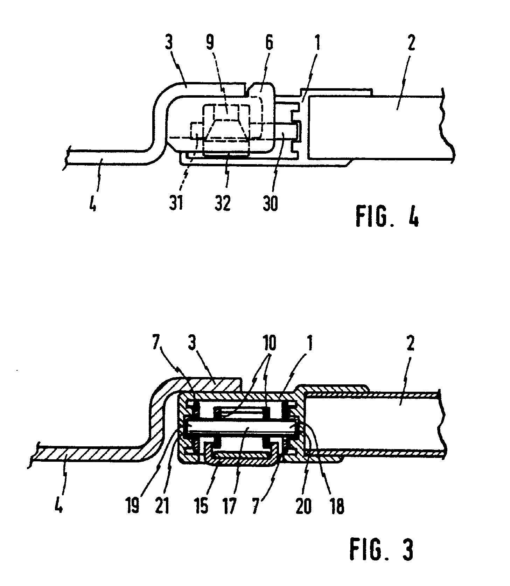

Figur 3 einen Schnitt durch die Vorrichtung von Figur 1 an der Linie III-III ;

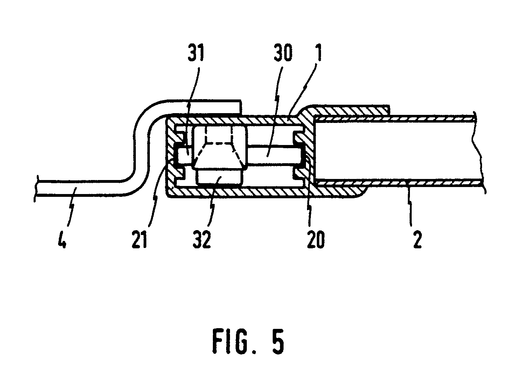

Figur 4 eine Stirnansicht von oben der Vorrichtung von Figur 1 ; und

Figur 5 einen Schnitt durch die Vorrichtung von Figur 1 an der Linie V-V.

Die Figuren zeigen eine Bordwandeinfassung 1, die seitlich an einer Bordwand 2 befestigt ist und an einem Anschlag 3 einer Runge 4 anliegt. In die Bordwandeinfassung 1 ist ein Riegelverschluß 5 integriert, der mit einer an der Runge 4 festgeschweißten Tasche 6 zusammenarbeitet. Der Riegelverschluß 5 besitzt einen Riegel, der sich aus einem bügelförmigen Riegelteil 7 und aus einem am Steg 8 des Riegelteils 7 befestigten Verschlußteil 9 zusammensetzt. Der Verschlußteil 9 besitzt seitlich angesetzte Flossen 30, 31, die in entsprechenden Nuten 20, 21 der Bordwandeinfassung 1 geführt sind. Weiterhin weist der Verschlußteil 9 auf seiner Vorderseite einen Nocken 32 auf, der sich an der Vorderwand der Einfassung 1 abstützt. Außerdem ist der Verschlußteil 9 an seiner Spitze mit einer Keilfläche 25 versehen, die in Schließstellung sich mit einer ähnlich geformten Fläche der Tasche 6 in Anlage befindet. Der Antrieb des Riegels erfolgt mittels eines Kniehebels, der sich aus zwei Kniehebelgliedern 10 und 11 zusammensetzt. Das dem Riegel entfernter liegende Kniehebelglied 11 ist mittels einer Anlenkachse 12 im Bereich einer Ausnehmung 13 in der Bordwandeinfassung 1 gelagert. Dieses Kniehebelglied 11 ist über das Kniegelenk 14 des Kniehebels hinaus verlängert und in der Verlängerung als Handhabe 15 ausgebildet. Das freie Ende des anderen Kniehebelgliedes 10 besitzt ein Langloch 16, durch das eine am bügelförmigen Riegelteil 7 befestigte Achse 17 hindurchgeht. Die Achse springt an beiden Seiten des bügelförmigen Riegelteils 7 vor und ist mit diesen Vorsprüngen 18, 19 in den Nuten 20, 21 der Bordwandeinfassung 1 geführt. Zwischen den Schenkeln des bügelförmigen Riegelteils 7 ist ein Halter 22 angeordnet, der eine Büchse 23 festhält. In der Büchse 23 ist eine Druckschraubenfeder 24 geführt, die sich einerseits am Halter 22 und andererseits an der Achse 17 abstützt.

Die seitlichen Flossen 30, 31 und der Nocken 32 dienen zur Abstützung des Verschlußteils 9 des Riegels 7, 9, so daß dieser selbständig geführt ist und auf ihn einwirkende Kräfte von diesem selbst aufgenommen werden können. Solche Kräfte treten insbesondere dann auf, wenn Ladegut gegen die geschlossene Bordwand drückt. Ein solcher Druck verursacht ein Drehmoment am Verschlußteil 9, welches durch die seitlichen Flossen 30, 31 und insbesondere durch den sich an der Vorderwand der Bordwandeinfassung 1 innen abstützenden Nocken 32 aufgenommen wird.

Wird der Verschluß mit Hilfe der Handhabe 15 geschlossen, dann wird der Verschlußteil 9 des Riegels in die Tasche 6 eingeführt. Während des Schließvorgangs wird die Bewegung des Verschlußteils 9 in die Tasche 6 durch Anlage der Keilfläche 25 an einer inneren Fläche der Tasche 6 alsbald gestoppt, was zur Folge hat, daß die Druckschraubenfeder 24 zusammengedrückt wird. Dadurch wird auf den Kniehebel 10, 11 ein Druck ausgeübt, was zur Folge hat, daß der ganze Verschluß in Schließstellung gehalten wird, weil nämlich das Kniegelenk 14 sich gegenüber den Achsen 12 und 17 in einer Übertotpunktlage befindet. Fehlt der von der Tasche 6 ausgeübte Gegendruck, dann ist der Verschlußmechanismus ohne Spannung, so daß die Teile des Verschlusses leicht bewegbar sind. Wenn deshalb die mit einer solchen Bordwandeinfassung versehene Bordwand abgeklappt wird, dann kann die Handhabe 15 allein auf Grund der Schwerkraft nach unten klappen, so daß sie nicht mehr vorsteht.

Der Verschluß besitzt zur weiteren Sicherung noch einen Arretierungsmechanismus. Dieser besteht aus einem hinterhalb der Handhabe 15 angeordneten und etwas über diese vorspringenden Schieber 26, der mit einer Druckschraubenfeder 27 beaufschlagt ist. Eine Öffnung 28 ist in einer Kröpfung des Schiebers 26 vorgesehen, in welche ein Haken 29 am Kniehebelglied 10 einhakt. Durch Niederdrücken des Schiebers 26 kann die Arretierung entriegelt werden.

## Ansprüche

1. Riegelverschluß (5) in einer seitlichen Einfassung (1) für Bordwände (2) von Nutzfahrzeugen zum Verriegeln der Bordwand (2) gegen ein festes Aufbauteil (4) des Fahrzeuges, dessen Riegel (7, 9) in der Einfassung (1) geführt und mit Hilfe eines einen Kniehebel (10, 11) aufweisenden Antriebs in eine am festen Aufbauteil (4) angebrachte Tasche (6) einschiebbar ist, wobei das vom Riegel (7, 9) entfernte Kniehebelglied (11) über das Kniegelenk (14) verlängert und dort als Handhabe (15) ausgebildet ist, wobei weiterhin in Schließstellung sich das Kniegelenk (14) des Kniehebels (10, 11) gegenüber den Anlenkpunkten (17, 12) desselben am Riegel (7, 9) und an der Einfassung (1) in einer Übertotpunktlage befindet und durch ein federnd nachgiebiges Element (24) in diese Lage gedrückt wird und wobei außerdem der Riegel in dem an den Antrieb (10, 11) angrenzenden Teil als Bügel (7) ausgebildet ist, der in der Einfassung geführt ist und von dessen Verbindungssteg (8) der andere Teil (Verschlußteil 9) des Riegels absteht, dadurch **gekennzeichnet,** daß der Verschlußteil (9) eine gesonderte, mit der Einfassung (1) zusammenwirkende Führung (30, 31) aufweist.

2. Riegelverschluß nach Anspruch 1, dadurch **gekennzeichnet,** daß die Führung für den Verschlußteil (9) aus seitlich an diesem vorgesehenen Flossen (30, 31) besteht, die in entsprechenden Nuten (20, 21) der Einfassung (1) geführt sind.

3. Riegelverschluß nach Anspruch 2, dadurch **gekennzeichnet,** daß der Verschlußteil (9) einen Nocken (32) aufweist, der sich an der Vorderwand der Einfassung (1) abstützt.

4. Riegelverschluß nach einem der Ansprüche 1, 2 oder 3, dadurch **gekennzeichnet,** daß der Riegel (7, 9) in dem Bereich, in dem er mit der am festen Aufbauteil (4) angebrachten Tasche (6) zusammenwirkt, keilförmig (bei 25) ausgebildet ist und daß das federnd nachgiebige Element (15) im Antrieb (10, 11) untergebracht ist.

5. Riegelverschluß nach Anspruch 4, dadurch **gekennzeichnet,** daß das federnd nachgiebige Element aus einer zwischen dem Riegel (7, 9) und dem Kniehebel (10, 11) angeordneten Schraubendruckfeder (24) besteht.

6. Riegelverschluß nach Anspruch 5, dadurch **gekennzeichnet,** daß das hintere Ende des Riegels (7, 9) ein Langloch (16) aufweist, in dem die Anlenkachse (17) des Kniehebels (10, 11) geführt ist.

7. Riegelverschluß nach Anspruch 6, dadurch **gekennzeichnet,** daß die Schraubendruckfeder (24) in einer Ausnehmung (23) im Riegel (7, 9) angeordnet ist und sich einerseits am Boden der Ausnehmung (23) und andererseits an der Anlenkachse (17) des Kniehebels (10, 11) abstützt.

8. Riegelverschluß nach Anspruch 7, dadurch **gekennzeichnet,** daß die Ausnehmung als am Bügelteil (7) des Riegels befestigte Büchse (23) mit geschlossenem Boden ausgebildet ist.

9. Riegelverschluß nach einem der vorhergehenden Ansprüche, dadurch **gekennzeichnet,** daß der Riegel (7, 9) nur auf der der Außenseite der Bordwand (2) entsprechenden Seite eine Keilfläche (25) aufweist.

10. Riegelverschluß nach Anspruch 9, dadurch **gekennzeichnet,** daß die Keilfläche (25) an der Spitze des Riegels (7, 9) steiler verläuft als im angrenzenden Teil.

11. Riegelverschluß nach einem der vorhergehenden Ansprüche, dadurch **gekennzeichnet,** daß die Handhabe (15) eine Feststelleinrichtung (26-29) aufweist.

## Claims

1. Latch lock (5) in a lateral encasement (1) for drop sides (2) of commercial vehicles for securing the drop side (2) to a fixed component (4) of the vehicle, the latch (7, 9) of which is guided in the encasement (1) and inserted into a pocket in the fixed component (4) by means of a drive including a toggle lever (10, 11), whereby the toggle-lever part (11) remote from the latch (7, 9) is extended beyond the toggle hinge (14), arranged thereat as a handle (15), whereby furthermore in the locked position the toggle hinge (14) of the toggle lever (10, 11) is located opposite the linkage point (17, 12) of same on the latch (7, 9) and on the encasement (1) in an above dead-centre position and is pushed into this position by a resilient element (24), and whereby the latch is constructed to be a bridge (7) at the part adjacent to the drive (10, 11), which bridge is guided in the encasement and from which connecting web (8) the other member (closing member 9) protrudes, **characterised in that** the closing member (9) comprises a separate guide (30, 31) co-acting with the encasement (1).

2. Latch lock according to claim 1, **characterised in that** the guide of the closing member (9) consists of laterally thereto arranged fins (30, 31), which are guided in respective grooves (20, 21) of the encasement (1).

3. Latch lock according to claim 2, **characterised in that** the closing member (9) comprises a cam (32) which supports itself against the front wall.

4. Latch lock according to one of claims 1, 2 or 3, **characterised in that** the latch (7, 9) is wedge-shaped (at 25) in the area of co-acting with pocket (6) in the fixed component (4), and that the resilient element (15) is accommodated in the drive (10, 11).

5. Latch lock according to claim 4, **characterised in that** the resilient element consists of a helical pressure spring (24), disposed between the latch (7, 8) and the toggle lever (10, 11).

6. Latch lock according to claim 5, **characterised in that** the rear end of the latch (7, 9) has an elongate hole (16) wherein the hinge axis (17) of the toggle lever (10, 11) is guided.

7. Latch lock according to claim 6, **characterised in that** the helical pressure spring (24) is arranged in a cut-out (23) in the latch (7, 9) and abuts on the one side against the bottom of the cut-out (23) and on the other side against the hinge axis (17) of the toggle lever (10, 11).

8. Latch lock according to claim 7, **characterised in that** the cut-out is constructed to be a bushing (23) with sealed bottom, attached to the bridging member (7).

9. Latch lock according to one of the above claims, **characterised in that** the latch (7, 9) has a wedge-shaped surface only on the side corresponding to the outside of the drop side (2).

10. Latch lock according to claim 9, **characterised in that** the wedge surface (25) is steeper at the tip of the latch (7, 9) than in the adjacent part.

11. Latch lock according to one of the above claims, **characterised in that** the handle (15) has a locking means (26-29).

**Revendications**

1. Fermeture à verrou (5) dans un encadrement latéral (1) pour cloisons de bord (2) de véhicules utilitaires, pour verrouiller la cloison de bord (2) contre une pièce fixe (4) de carrosserie du véhicule, fermeture dont le verrou (7, 9) est guidé dans l'encadrement (1) et dont, au moyen d'un entraînement présentant un levier articulé (10, 11), on peut faire glisser le verrou (7, 9) dans une poche (6) rapportée dans la pièce fixe (4) de carrosserie, étant entendu que l'élément (11) du levier articulé, éloigné du verrou (7, 9), est prolongé au-delà de l'articulation à genouillère (14) et est réalisé à cet endroit sous la forme d'une manette (15), étant entendu, de plus, qu'en position de fermeture, l'articulation à genouillère (14) du levier articulé (10, 11) se trouve, sur le verrou (7, 9) et sur l'encadrement (1), par rapport aux points d'articulation (17, 12) de celui-ci, dans une position située au-delà du point mort, et est poussé dans cette position par un organe flexible à ressort (24), et étant d'autre part entendu que le verrou est réalisé sous la forme d'un étrier (7) dans la partie voisine de l'entraînement (10, 11), étrier qui est guidé dans l'encadrement (1) et dont la traverse de liaison (8) est située à une certaine distance de l'autre pièce (pièce de fermeture 9) du verrou, caractérisée en ce que la pièce de fermeture (9) présente un guidage particulier (30, 31), agissant en liaison avec l'encadrement (1).

2. Fermeture à verrou suivant la revendication 1, caractérisée en ce que le guidage pour la pièce de fermeture (9) est constituée d'ailerons (30, 31) prévus latéralement sur celle-ci, qui sont guidés dans des rainures (20, 21) correspondantes de l'encadrement (1).

3. Fermeture à verrou suivant la revendication 2, caractérisée en ce que la pièce de fermeture (9) présente un mantonnet (32) qui s'appuie sur la paroi avant de l'encadrement (1).

4. Fermeture à verrou suivant l'une quelconque des revendications 1, 2 ou 3, caractérisée en ce que le verrou (7, 9), dans la zone dans laquelle il agit en liaison avec la poche (6) rapportée sur la pièce fixe de carrosserie (4), est réalisé en forme de coin (en 25) et en ce que l'organe élastique à ressort (15) est inséré dans l'entraînement (10, 11).

5. Fermeture à verrou suivant la revendication 4, caractérisée en ce que l'organe élastique à ressort est constitué d'un ressort cylindrique de compression (24) disposé entre le verrou (7, 9) et le levier à genouillère (10, 11).

6. Fermeture à verrou suivant la revendication 5, caractérisée en ce que l'extrémité arrière du verrou (7, 9) présente un trou allongé (16) dans lequel est guidé l'axe d'articulation (17) du levier à genouillère (10, 11).

7. Fermeture à verrou suivant la revendication 6, caractérisée en ce que le ressort cylindrique de compression (24) est fixé dans un évidement (23) du verrou (7, 9) et s'appuie, d'un côté, sur le fond de l'évidement (23) et, de l'autre côté, sur l'axe d'articulation (17) du levier à genouillère (10, 11).

8. Fermeture à verrou suivant la revendication 7, caractérisée en ce que l'évidement est réalisé sous la forme d'une douille (23) fixée à la pièce en étrier (7) du verrou et comportant un fond fermé.

9. Fermeture à verrou suivant l'une quelconque des revendications précédentes, caractérisée en ce que le verrou (7, 9) présente, seulement sur la face correspondant au côté extérieur de la cloison de bord (2), une surface en forme de coin (25).

10. Fermeture à verrou suivant la revendication 9, caractérisée en ce que la surface en forme de coin (25) présente une pente plus inclinée à la pointe du verrou (7, 9) que sur la partie voisine.

11. Fermeture à verrou suivant l'une quelconque des revendications précédentes, caractérisée en ce que la manette (15) présente un dispositif de blocage (26-29).

FIG. 1

FIG. 2

FIG. 4

FIG. 3

FIG. 5